# EUROPEAN PATENT SPECIFICATION

(11) **EP 0 627 583 B1**
(45) Date of publication and mention of the grant of the patent: **15.04.1998**
(21) Application number: 94303959.4
(22) Date of filing: 02.06.1994
(51) Int. Cl.: F16K 7/16

(54) **Diaphragm valve**
Membranventil
Soupape à diaphragme

(30) Priority: 02.06.1993 JP 131939/93
(43) Date of publication of application: 07.12.1994
(73) Proprietor: Kiyohara, Masako, Kumamoto-shi Kumamoto-ken (JP)
(72) Inventor: Itoi, Shigeru, c/o Fujikin Incorporated, Osaka (JP); Yamaji, Michio, c/o Fujikin Incorporated, Osaka (JP); Kojima, Tetsuya, c/o Fujikin Incorporated, Osaka (JP)
(74) Representative: Smith, Norman Ian

(56) References cited:
- EP-A- 0 190 414
- EP-A- 0 530 947
- DE-C- 1 152 583
- GB-A- 320 778
- GB-A- 1 462 176
- US-A- 2 856 148
- US-A- 4 741 510
- US-A- 4 846 215
- US-A- 5 108 069

## Description

The present invention relates to a diaphragm valve, and has particular reference to a diaphragm valve of the type comprising a fluid inlet means, a fluid outlet means, fluid path means defining a path for fluid flow between the inlet and the outlet, a flexible diaphragm means juxtaposed said path, a valve seat means, and means for flexing the diaphragm means into contact with the valve seat to reduce or stop the flow of fluid in the path in service.

In prior art diaphragm valves of the kind described above, the seat means is typically formed integrally with a wall of a valve body circumjacent the inlet means. When the valve seat means becomes damaged or worn in service it is therefore difficult to repair or replace the seat, and replacement of the whole valve is usually necessary.

US-A-4,471,510 discloses a diaphragm valve which has a valve insert carrying a valve seat. The insert may be exchanged with other inserts to tailor the throttle effect of the valve to fluid flow.

DE-C-1,152,583 discloses a diaphragm valve provided with a valve seat integral with a carrier ring, which carrier ring is formed with an inlet passage and a plurality of outlet passages.

GB-A-320,778 discloses a diaphragm valve provided with a valve seat carried by a carrier ring, which carrier ring is formed with an inlet passage and a plurality of outlet passages.

According to the present invention there is provided a diaphragm valve for the control of fluid flow comprising:-
a valve body in which defines a valve cavity, a wall of which body is provided with fluid inlet means and fluid outlet means;
flexible diaphragm means juxtaposed a fluid flow path between the inlet and the outlet;
a removable carrier ring disposed in juxtaposition with the wall of said body and provided with a central hole in fluid communication with the inlet means;
valve seat means disposed circumjacent one end of the central hole; and
means for flexing said diaphragm means into contact with said seat means thereby to reduce or stop the flow of fluid in said path,
characterised by a first spacing ring circumjacent the other end of the central hole and a second spacing ring juxtaposed the periphery of the ring, which first and second spacing rings are disposed intermediate the wall and the carrier ring and configured such that when the first spacing ring abuts the wall the second spacing ring is spaced slightly from the wall. Means may be provided to press the peripheral edge of the carrier ring against the wall thereby to bend the carrier ring. In this way the first spacer ring acts as a fulcrum, so that when the second spacer ring is pressed against the wall, the first spacing ring is pressed against the wall with an increased force whereby an enhanced seal between the first spacing ring and the wall is formed.

In some embodiments the carrier ring may comprise a plurality of additional holes circumferentially spaced one from another around the central hole formed through the ring.

In some embodiments the seat means may comprise a seat ring disposed in a recess formed in the carrier ring circumjacent said central hole; typically the seat ring may be formed from a synthetic resin material.

Alternatively, however, the seat means may be formed integrally with the seat carrier.

In another aspect of the invention, said diaphragm means may be retained in abutment with the carrier ring juxtaposed the periphery of the latter by a diaphragm retaining means; said diaphragm may be shaped such that in a relaxed position it is spaced from said central and additional holes thereby to allow fluid to flow between the inlet and outlet passages formed in the carrier in the space between the carrier ring and the diaphragm means. On operating said means for flexing the diaphragm, the diaphragm may be brought into contact with the seat means circumjacent said central hole thereby to obturate the fluid path between the central and additional holes formed in said carrier ring.

In some embodiments the carrier ring may be urged against the wall by said diaphragm retaining means.

Typically, said first and second spacing rings may be formed integrally with said carrier ring. Alternatively, however, at least one of said first and second spacing rings may be formed from a synthetic resin material and may be disposed in a recess formed in the carrier ring.

In some embodiments said diaphragm means may comprise a diaphragm formed from a thin metal plate which can be flexed by said means for flexing the diaphragm means.

In accordance with the present invention as hereinbefore described there is therefore provided a diaphragm valve in which the valve seat means is removable from the valve. The valve seat is to be carried by a seat carrier removably disposed within a valve cavity of a valve body. The valve of the present invention has the advantage therefore that when the valve seat means becomes damaged or worn in service, it can be easily removed from the valve or cavity for repair or replacement.

Following is a description by way of description only and with reference to the accompanying drawings of methods of carrying the present invention into effect.

In the drawings:-
Fig. 1 is a sectional view showing an open valve state of the diaphragm valve according to the invention.
Fig. 2 is a sectional view showing a closed valve state.

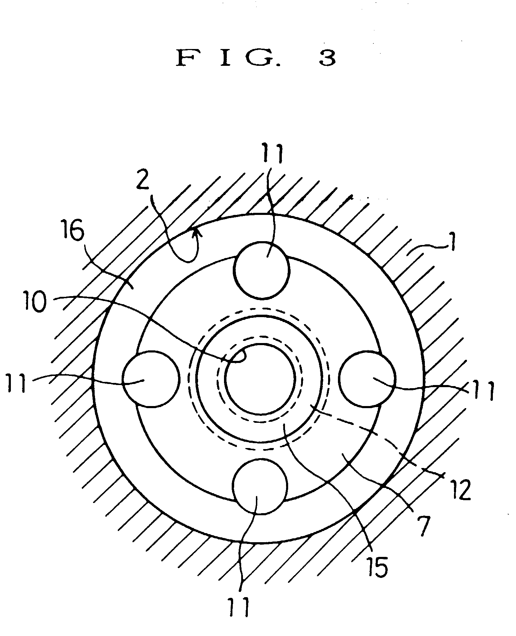

Fig. 3 is a sectional view of III-III line in Fig. 1.
Fig. 4 is a magnified detailed drawing of essential part (seat ring) in Fig. 1.
Fig. 5 is a sectional view showing a modified example of seat ring.
Fig. 6 is a sectional view showing other modified example of seat ring.

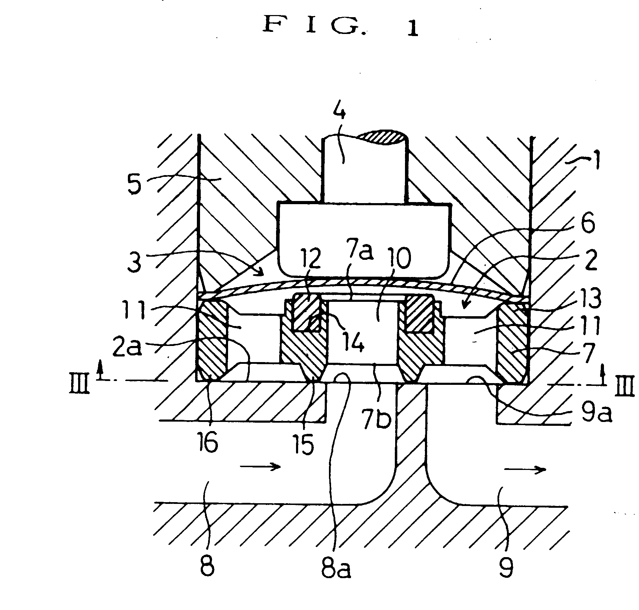

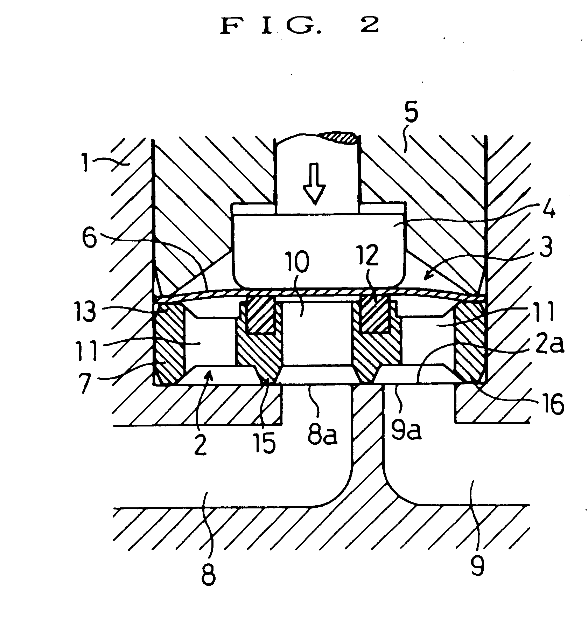

Fig. 1 shows an open valve state of the diaphragm valve, and Fig. 2 shows a closed valve state.

In the diaphragm valve shown in Fig. 1 and Fig. 2, numeral 1 is a metallic valve body, 2 is a valve compartment with a circular cross section formed in the valve body 1, 3 is a valve operating compartment formed in the valve body 1, 4 is a metallic stem acting as diaphragm manipulating means disposed retractably in the valve operating compartment 3, 5 is a diaphragm holder disposed in the valve operating compartment, 6 is a diaphragm made of circular thin metal plate such as stainless steel for shutting off between the valve compartment 2 and valve operating compartment 3, and 7 is a seat ring which is a valve seat forming member and is inserted in the valve compartment 2.

In the valve body 1, as shown in Fig. 1, fluid passages 8 and 9 communicating with each other through the valve compartment 2 are formed. That is, the flow-in passage 8 and flow-out passage 9 have mouths 8a, 9a in the bottom wall 2a. In particular the flow-in passage mouth 8a is opened in the center of the bottom wall 2a.

The diaphragm holder 5 is for pressing the peripheral edge of the diaphragm 6 to the seat ring 7 as shown in Fig. 1, and its pressing force is applied by tightening a nut member (not shown) threadedly mounted on the valve body 1.

The seat ring 7 is formed in a metallic annular form and is made from stainless steel or the like, with its outside diameter roughly equal to the inside diameter of the valve compartment 2. Making relatively thin the thickness in the axial direction allows it to possess a certain elasticity or flexibility. The valve hole 10 which is the central hole of the seat ring 7 is overlaid on the flow-in passage mouth 8a. In the seat ring 7, four communication holes 11 ... communicating with the flow-out passage mouth 9a are provided. The communication holes 11 ... are disposed at equal intervals around the valve hole 10.

On the surface 7a of the seat ring 7, an annular valve seat 12 is projecting along the peripheral edge of the valve hole 10, and an annular diaphragm holding part 13 is projecting along the peripheral edge of the seat ring 7. The diaphragm holding part 13 holds the peripheral edge of the diaphragm 6, in cooperation with the diaphragm holder 5, by the pressing force of the diaphragm holder 5.

In the embodiment, meanwhile, the valve seat 12 is made from a synthetic resin material, and is buried and held in an annular groove 14 formed in the ring surface 7a, so that the surface area of the valve seat 12 may be as small as possible. This valve seat 12 is designed to contact with or depart from the central part of the diaphragm 6 by the extending and withdrawing operation of the stem 4, and the fluid passages 8, 9 are closed and opened by the contacting and departing action. That is, when the valve hole 10 is closed as the diaphragm 6 contacts with the valve seat 12, flow of fluid from the flow-in passage 8 into the flow-out passage 9 is inhibited (see Fig. 2). When the diaphragm 6 is departed from the valve seat 12, the flow-in passage 8 and flow-out passage 9 communicate with each other through the valve hole 10 and communication holes 11 ... with the result that flow of fluid from the flow-in passage 8 into the flow-out passage 9 is permitted (see Fig. 1).

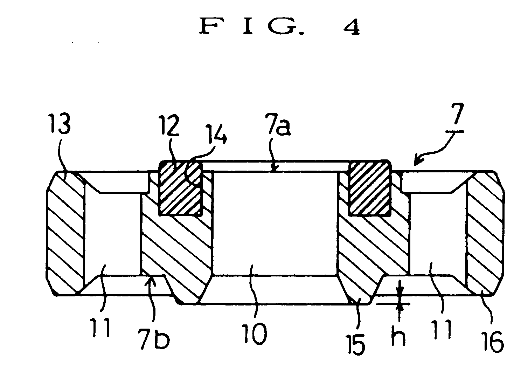

On the back side face 7b of the seat ring 7, an annular seal part 15 is projecting along the peripheral edge of the valve hole 10, and an annular ring contact part 16 is projecting along the peripheral edge of the seat ring 7. The projection of the seal part 15 from the ring back side face 7b is, as shown in Fig. 4, set larger than the projection of the ring contact part 16 by a slight amount h (usually about 0.05 mm). Therefore, when the ring contact part 16 is pressed against the bottom wall 2a of the valve compartment 2 by the pressing force of the diaphragm holder 5, the seat ring 7 is bent with the seal part 15 acting as a flucrum. As a result, the seal part 15 is pressed against by the peripheral edge of the flow-in passage mouth 8a with an increased force.

That is, the contact surface pressure of the seal part 15 to the bottom wall 2a is heightened, and in the closed valve state shown in Fig. 2, there is no fear of the so-called back leakage, i. e. escape of fluid through between the seal part 15 and bottom wall 2a due to back pressure from the flow-out passage 9.

As understood from the description above, in the diaphragm valve of the invention, since the valve seat 12 is formed on the independent replaceable seat ring 7, as compared with the conventional diaphragm mentioned at the beginning, the maintainability is notably improved, and the life of the valve itself can be extended outstandingly. Moreover, although the seat ring 7 is formed as an independent member, fluid leak through between the seat ring 7 bottom wall 2a, i. e. so-called back leakage does not occur. The required valve function is exhibited sufficiently, and its practical value is extremely great.

The invention is not limited to the foregoing embodiments alone, but it may be changed and modified in a range not departing from the scope of the claims.

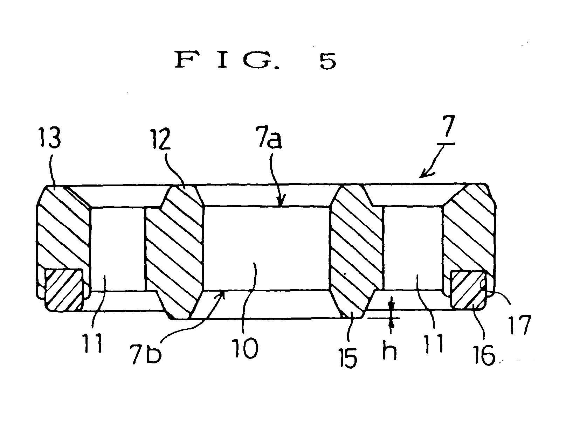

For example, in the above embodiment, the ring contact part 16 is formed integrally with the seat ring 7. But, as shown in Fig. 5, the ring contact part 16 may be separately made of synthetic resin material, and may be buried and held in an annular groove 17 formed in the ring back side 7b. In this case. too, the valve seat 12 may be made of synthetic resin material, and may be also buried and held in the ring surface 7a.

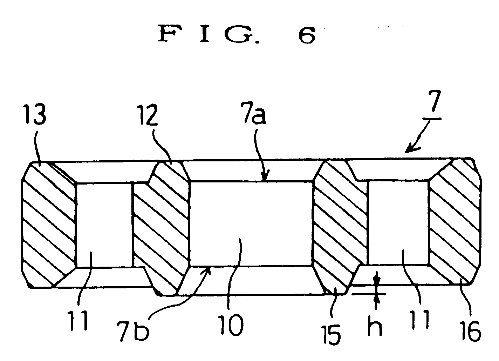

Moreover, as shown in Fig. 6, all of the valve seat 12, diaphragm holder 13, seal part 15, and ring contact part 16 may be formed integrally with the seat ring 7.

## Claims

1. A diaphragm valve for the control of fluid flow comprising:-
a valve body in which defines a valve cavity, a wall (2a) of which body is provided with fluid inlet means (8a) and fluid outlet means (9a); flexible diaphragm means (6) juxtaposed a fluid flow path between the inlet and the outlet;
a removable carrier ring (7) disposed in juxtaposition with the wall (2a) of said body and provided with a central hole (10) in fluid communication with the inlet means;
valve seat means (12) disposed circumjacent one end of the central hole (10); and
means for flexing said diaphragm means into contact with said seat means thereby to reduce or stop the flow of fluid in said path,
characterised by a first spacing ring (15) circumjacent the other end of the central hole (10) and a second spacing ring (16) juxtaposed the periphery of the carrier ring, which first and second spacing rings are disposed intermediate the wall and the carrier ring and configured such that when the first spacing ring abuts the wall (2a) the second spacing ring is spaced slightly (h) from the wall.

2. A valve as claimed in claim 1 characterised in that means (5) are provided to press the peripheral edge of the carrier ring against the wall thereby to bend the carrier ring.

3. A valve as claimed in claim 1 on claim 2 wherein the first spacing ring (15) projects by about 0.05mm further than spacing ring (16).

4. A valve as claimed in any one of the preceding claims 1 wherein the valve seat means (12) comprises a seat ring disposed in a recess (14) formed in said carrier ring circumjacent the central hole.

5. A valve as claimed in claim 4 wherein said seat ring (12) is formed from a synthetic material.

6. A valve as claimed in any one of claims 1 to 3 wherein said seat means is formed integral with said carrier.

7. A valve as claimed in any one of the preceding claims wherein said diaphragm means (6) is retained in abutment with the carrier ring (7) and juxtaposed the periphery of the latter by diaphragm retaining means (5); and wherein said diaphragm (6) is shaped such that it is spaced from said central and additional holes.

8. A valve as claimed in claim 7 wherein said carrier ring (7) can be urged against the wall (2a) by said diaphragm retaining means (5).

9. A valve as claimed any preceding claim wherein said first and second spacing rings (15,16) are formed integrally with said carrier ring (7).

10. A valve as claimed in any one of claims 1 to 8 wherein said second spacing ring (16) is formed from a synthetic resin material and is disposed in a recess (17) formed in the carrier ring.

11. A valve as claimed in any preceding claim characterised in that the diaphragm means comprises a diaphragm (6) formed of a thin metal plate.

## Patentansprüche

1. Membranventil zur Steuerung einer Fluidströmung mit einem Ventilgehäuse, das eine Ventilkammer umschließt und das eine Wand (2a) aufweist, die mit einem Fluideinlaßmittel (8a) und einem Fluidauslaßmittel (9a) versehen ist;
einem flexiblen Membranmittel (6) in einer eine Fluidströmung zulassenden Verbindung zwischen Fluideinlaßmittel und Fluidauslaßmittel;
einem ausbaubaren Auflagering (7) in der Zuordnung zu der vorgenannten Wand (2a) des Gehäuses, der eine zentrale Öffnung (10) umschließt, die in einer Fluidströmung zulassenden Verbindung mit dem Einlaßmittel steht;
einem Ventilsitzmittel (12), das ein Ende der zentralen Öffnung (10) umgibt und
einem Mittel zum flexiblen Einwirken auf das Membranmittel derart, daß es zum Zusammenwirken mit dem Ventilsitzmittel zu bringen ist, um die Fluidströmung in der die Fluidströmung zulassenden Verbindung zwischen der zentralen öffnung und dem Einlaßmittel zu verringern, gegebenenfalls zu unterbrechen,
gekennzeichnet durch einen ersten Abstandsring (15), der das andere Ende der zentralen Öffnung (10) des Ventilsitzmittels umgibt, und einen zweiten Abstandsring (16) in der Zuordnung zu dem Außenumfang des Abstandsringes, wobei beide Abstandsringe zwischen der Wand und dem Auflagering angeordnet und so ausgebildet sind, daß bei Berührung zwischen erstem Abstandsring und Wand (2a) der zweite Abstandsring etwas von der Wand beabstandet ist.

2. Ventil wie in Anspruch 1 beansprucht, dadurch gekennzeichnet, daß Mittel (5) vorgesehen sind um die Umfangskante des Auflagerings gegen die Wand zu drücken und dabei den Auflagering zu biegen.

3. Ventil wie in Anspruch 1 oder Anspruch 2 beansprucht, bei dem der erste Abstandsring (15) etwa 0,05 mm über den zweiten Abstandsring (16) weiter hinausragt.

4. Ventil wie in einem beliebigen der vorhergehenden Ansprüche beansprucht, bei dem das Ventilsitzmittel (12) einen Ventilsitzring in einer Vertiefung (14) aufweist, die in dem Auflagering, dessen zentrale Öffnung konzentrisch umgebend, vorgesehen ist.

5. Ventil wie in Anspruch 4 beansprucht, bei dem der Ventilsitzring (12) aus synthetischem Werkstoff hergestellt ist.

6. Ventil wie in einem beliebigen der Ansprüche 1 bis 3 beansprucht, bei dem das Ventilsitzmittel einstückig mit dem Träger ausgebildet ist.

7. Ventil wie in einem beliebigen der vorgehenden Ansprüche beansprucht, bei dem das Membranmittel (6) mittels eines auf das Membranmittel einwirkenden Mittels (5) im Umfangbereich des Auflagerings (7) in Anlage an diesem gehalten ist, wobei das Membranmittel (6) eine solche Form hat, daß es in seinem zentralen Bereich vom Auflagering und zusätzlichen Öffnungen beabstandet ist.

8. Ventil wie in Anspruch 7 beansprucht, bei dem der Auflagering (7) mittels des Mittels (5) zum Halten des Membranmittels in Anlage am Auflagering zur Anlage an der Wand (2a) gebracht werden kann.

9. Ventil wie in einem beliebigen der vorhergehenden Ansprüche beansprucht, bei dem erster und zweiter Abstandsring (15,16) einstückig mit dem Auflagering (7) ausgebildet sind.

10. Ventil wie in einem beliebigen der Ansprüche 1 bis 8 beansprucht, bei dem der zweite Auflagering (16) aus einem Kunstharzmittel besteht und in einer Nut (17) des Aufnahmerings gehalten ist.

11. Ventil wie in einem beliebigen der vorhergehenden Ansprüche beansprucht, dadurch gekennzeichnet, daß das Membranmittel eine aus einer dünnen Metallplatte gebildete Membrane (6) aufweist.

## Revendications

1. Soupape à membrane pour la commande d'un écoulement de fluide comprenant :
un corps de soupape dans lequel est définie une cavité de soupape, une paroi (2a) dont le corps est muni de moyens d'admission de fluide (8a) et une sortie de fluide (9a) ;
une membrane souple (6) juxtaposée au circuit d'écoulement de fluide entre l'admission et la sortie ;
un anneau porteur amovible (7) disposé en juxtaposition avec la paroi (2a) du corps et muni d'un trou central (10) en communication de fluide avec les moyens d'admission;
un siège de soupape (12) disposé de façon circonjacente à une extrémité du trou central (10) ; et
des moyens pour faire plier cette membrane en contact avec le siège réduisant ainsi ou arrêtant l'écoulement de fluide dans le circuit,
caractérisée par un premier anneau d'espacement (15) circonjacent à l'autre extrémité du trou central (10) et un second anneau d'espacement (16) juxtaposé à la périphérie de l'anneau de support, lesquels premier et second anneaux d'espacement sont disposés entre la paroi et l'anneau porteur et ayant une configuration telle que lorsque le premier anneau d'espacement vient en butée contre la paroi (2a), le second anneau d'espacement est espacé légèrement (h) de la paroi.

2. Soupape selon la revendication 1, caractérisée en ce qu'il est prévu des moyens (5) pour comprimer le bord périphérique de l'anneau porteur contre la paroi faisant ainsi fléchir l'anneau porteur.

3. Soupape selon la revendication 1 ou la revendication 2, dans laquelle le premier anneau d'espacement (15) fait saillie sur environ 0,05 mm au-delà de l'anneau d'espacement (16).

4. Soupape selon l'une quelconque des revendications précédentes, dans laquelle le siège de soupape (12) comprend un anneau de siège disposé dans un évidement (14) ménagé dans l'anneau porteur circonjacent au trou central.

5. Soupape selon la revendication 4, dans laquelle l'anneau de siège (12) est réalisé à partir d'un matériau synthétique.

6. Soupape selon l'une quelconque des revendications 1 à 3, dans laquelle le siège est solidaire de l'anneau porteur.

7. Soupape selon l'une quelconque des revendications précédentes, dans laquelle la membrane (6) est maintenue en appui avec l'anneau porteur (7) et juxtaposée avec la périphérie de ce dernier par des moyens de retenue de membrane (5) ; et dans laquelle la configuration de la membrane (6) permet son espacement par rapport aux trous central et supplémentaire.

8. Soupape selon la revendication 7, dans laquelle l'anneau porteur (7) peut être forcé contre la paroi (2a) par les moyens de retenue de membrane (5).

9. Soupape selon l'une quelconque des revendications précédentes, dans laquelle les premier et second anneaux d'espacement (15, 16) sont solidaires de l'anneau porteur (7).

10. Soupape selon l'une quelconque des revendications 1 à 8, dans laquelle le second anneau d'espacement (16) est réalisé à partir d'un matériau de résine synthétique et il est disposé dans un évidement (17) formé dans l'anneau porteur.

11. Soupape selon l'une quelconque des revendications précédentes, caractérisée en ce que la membrane (6) est réalisée à partir d'une plaque métallique mince.
